# EUROPÄISCHE PATENTANMELDUNG

(11) **EP 1 535 723 A2**
(43) Veröffentlichungstag der Anmeldung: **01.06.2005**
(21) Anmeldenummer: 04025254.6
(22) Anmeldetag: 23.10.2004
(51) Int. Cl.: B29C 65/08, B65D 75/00, B65D 30/08, B32B 27/00

(54) **Vorrichtung zum Verschweissen von mehrlagigen Laminaten**

(30) Priorität: 29.11.2003 DE 10356431
(71) Anmelder: Herrmann Ultraschalltechnik GmbH & Co. KG, 76307 Karlsbad-Ittersbach (DE)
(72) Erfinder: Möglich, Hartmut, 76275 Ettlingen (DE)
(74) Vertreter: Dreiss, Fuhlendorf, Steimle & Becker

(57) **Zusammenfassung**

Vorrichtung zum Verschweißen von mehreren Lagen von Laminaten (34,36), mit einer Ultraschallsonotrode und einem Amboss, die zwischen sich wenigstens drei Lagen (30,32,34) der Laminate aufnehmen, wobei wenigstens zwei der Laminatschichten unterschiedlich hohe Schmelzpunkte aufweisen, wobei die Vorrichtung eine Ultraschallschweißvorrichtung (54) ist. Die Erfindung betrifft außerdem eine Verwendung der Vorrichtung sowie ein Herstellungsverfahren und einen nach dem Verfahren hergestellten Beutel (10).

## Beschreibung

Die Erfindung betrifft eine Vorrichtung zum Verschweißen von mehreren Lagen von Laminaten, mit einer Ultraschallsonotrode und einem Amboss, die zwischen sich wenigstens drei Lagen der Laminate aufnehmen, wobei wenigstens zwei der Laminatschichten unterschiedlich hohe Schmelzpunkte aufweisen.

Laminate werden in der Regel dann verwendet, wenn man Bögen benötigt, die unterschiedliche Eigenschaften aufweisen müssen. In der Getränkeindustrie werden zum Beispiel Getränkebeutel verwendet, die luftdicht, lichtdicht und geschmacks- sowie geruchsneutral sein müssen und außerdem mit dem Beutelinhalt keine Reaktionen eingehen dürfen. Bekannt sind zum Beispiel Laminate, die eine aus Aluminium bestehende Schicht, eine dran befestigte innere Schicht aus Polyethylen und eine äußere Schicht aus PET (Polyethylenterephthalat) aufweisen. Die innere Schicht aus Polyethylen besitzt den Vorteil, dass sie neutral hinsichtlich des Beutelinhalts ist, wobei diese Schicht einen Schmelzpunkt im Bereich von 110°C bis 120°C aufweist. Die äußere Schicht aus PET weist eine hohe mechanische Widerstandsfähigkeit auf und besitzt einen Schmelzpunkt von 180°C und höher. Der Beutel wird dadurch hergestellt, dass eine vordere und eine hintere Lage eines derartig gefalteten Laminatzuschnittes entlang ihrer Längsseiten und ihrer Oberseite miteinander verschweißt werden, wobei die beiden aus Polyethylen bestehenden Schichten aneinander anliegen. Das Verschweißen der Ränder dieser Schichten erfolgt durch Wärmeeintrag mittels eines Heizelementes, wodurch das niedrig schmelzende Polyethylen plastifiziert wird und sich die beiden aus Polyethylen bestehenden Schichten miteinander verbinden.

Es sind auch Beutel bekannt, die einen Boden besitzen, so dass sie aufrecht stehen können. Dieser Boden wird dadurch erzeugt, dass der die Vorder- und Rückseite bildende Laminatzuschnitt in seinem Bodenbereich eingeschlagen wird und dann die Längsränder miteinander verschweißt werden. Da der Wärmeeintrag jedoch maximal so groß sein kann, dass die aus Polyethylen bestehende Schicht plastifiziert, erfolgt keine Verbindung der aneinanderliegenden Schichten aus PET, da diese Schichten einen wesentlich höheren Schmelzpunkt aufweisen. Der Boden besteht demnach lediglich aus zwei Bodenlappen, die nicht miteinander verbunden sind. Daher werden in den eingeschlagenen Teil des Bodens im Bereich der Längsränder Ausstanzungen eingebracht, so dass durch die Ausstanzungen hindurch die beiden aus Polyethylen bestehenden Schichten der äußeren Beutelflächen aneinander anliegen. Somit können durch die Ausstanzungen hindurch diese beiden Schichten aus Polyethylen miteinander verschweißt werden. Ein derartiger Beutel ist jedoch aufwändig herzustellen, da zusätzlich zum Schweißvorgang ein Stanzvorgang durchgeführt werden muss.

Der Erfindung liegt daher die Aufgabe zugrunde, eine Vorrichtung bereit zu stellen, mit welcher auf einfache Art und Weise auch aus mehreren Lagen bestehende Laminate miteinander verschweißt werden können.

Diese Aufgabe wird erfindungsgemäß dadurch gelöst, dass die Vorrichtung eine Ultraschallschweißvorrichtung ist.

Durch die Verwendung einer Ultraschallschweißvorrichtung zum Verschweißen von aus mehreren Lagen bestehenden Laminaten wird der wesentliche Vorteil erzielt, dass nicht nur die Schichten aus Materialien mit niedrigen Schmelzpunkten miteinander verbunden werden können, sondern auch die Schichten aus Materialien mit höheren Schmelzpunkten, ohne dass die Schichten aus Materialien mit niedrigen Schmelzpunkten Schaden nehmen. Daher erübrigt sich insbesondere bei der Herstellung von Böden an Schlauchbeuteln für Getränke die beim Stand der Technik erforderliche Ausstanzung, so dass mit der erfindungsgemäßen Vorrichtung ein Arbeitsschritt eingespart wird.

Bei einer Weiterbildung ist vorgesehen, dass der Amboss der Vorrichtung elastisch gelagert wird. Dadurch wird vermieden, dass die von der Sonotrode abgegebene Ultraschallenergie durch das Werkstück hindurch in die Sonotrode eingeleitet wird, ohne dass diese Energie ein Schweißen verursacht.

Mit Vorzug besitzt die Kontaktfläche des Ambosses einen Freiheitsgrad in Schwingungsrichtung der Ultraschallsonotrode. Dies bedeutet, dass die Kontaktfläche des Ambosses zumindest geringfügig in der gleichen Richtung schwingt, wie die Ultraschallsonotrode, wodurch die Schweißergebnisse bedeutend verbessert werden.

Bei einer Weiterbildung ist vorgesehen, dass die Kontaktfläche des Ambosses einen Freiheitsgrad senkrecht zur Schwingungsrichtung der Ultraschallsonotrode aufweist. Dabei kann der Amboss über einen weiteren Schwingungserzeuger angeregt werden, so dass dieser senkrecht zur Ultraschallsonotrode schwingt. Auch hierdurch werden die Schweißergebnisse verbessert.

Um die Freiheitsgrade auf einfache Art und Weise erzielen zu können, ist der Amboss erfindungsgemäß frei auskragend gelagert. Bei einem anderen Ausführungsbeispiel ruht der Amboss auf einem Federelement. Dadurch wird die Möglichkeit geschaffen, dass der Amboss nicht absolut starr ist, sondern geringfügig den Bewegungen der Ultraschallsonotrode ausweichen bzw. folgen kann.

Erfindungsgemäß weist die Spitze der Ultraschallsonotrode eine Ausbauchung auf. Mittels der Ausbauchung wird die Ultraschallenergie gezielt punktuell in das aus mehreren Lagen bestehende Laminat eingeleitet, so dass zunächst die Schicht aus dem Material mit niedrigem Schmelzpunkt plastifiziert wird. Die Ausbauchung bewirkt eine Verdrängung dieses plastifizierten Materials, so dass anschließend das Material mit höherem Schmelzpunkt plastifiziert wird. Dadurch wird verhindert, dass zu hohe Energien in die Schichten aus dem niedrig schmelzenden Material eingeleitet werden. Es erfolgt lediglich eine Verdrängung dieses Materials, jedoch keine Zerstörung.

Die Erfindung betrifft auch eine erfindungsgemäße Verwendung der Vorrichtung zur Herstellung einer aus einem Beutel bestehenden Verpackung, insbesondere einer Getränkeverpackung. Wie bereits erwähnt, werden durch die Verwendung dieser Vorrichtung derartige Getränkepackungen, insbesondere deren Boden dadurch einfacher und kostengünstiger hergestellt, dass ein Arbeitsschritt, nämlich die Ausstanzung im Randbereich der Seitenränder des Bodens entfallen können.

Die Erfindung betrifft ferner ein Verfahren zum Verschweißen von aus mehreren Lagen bestehenden Laminaten bei denen wenigstens zwei Laminatschichten unterschiedlich hohe Schmelzpunkte aufweisen, wobei wenigstens drei Laminatlagen miteinander verschweißt werden und die Laminatlagen derart übereinandergelegt werden, dass die Laminatschichten mit gleich hohen Schmelzpunkten aneinander anliegen, wobei die Laminatschichten mittels Ultraschall miteinander verschweißt werden.

Durch die Verwendung von Ultraschall als Schweißenergie, wird, wie bereits oben erwähnt, zunächst das niedrig schmelzende Material plasitifiziert, so dass die beiden aus diesem Material bestehenden Laminatschichten miteinander verbunden werden. Anschließend werden die höher schmelzenden Materialien plastifiziert, so dass die aus diesen Materialien bestehenden Laminatschichten miteinander verbunden werden. Die Laminatlagen sind somit alle miteinander verbunden, und zwar unabhängig von den Schmelzpunkten der Materialien der einzelnen Schichten.

Ein erfindungsgemäßer Verfahrensschritt sieht vor, dass nach dem Plastifizieren des Materials der Schicht mit niedrigem Schmelzpunkt dieses Material solange verdrängt wird, bis der erforderlich Schweißdruck zum Plastifizieren des Materials der Schicht mit höherem Schmelzpunkt vorherrscht. Dies erfolgt in einem Arbeitsgang, da die Schichtdicken extrem gering sind und daher nur sehr wenig Material verdrängt werden muss, so dass der Schweißdruck auch nach dem Verdrängen des plastifizierten Materials im wesentlichen konstant bleibt.

Eine Alternative sieht vor, dass der Schweißdruck während des Schweißvorganges erhöht wird und/oder dass die Sonotrode während des Schweißvorganges zugestellt wird. Hierdurch können die Schweißergebnisse verbessert und/oder gezielt verändert werden.

Die Erfindung betrifft auch einen Beutel, der mit dem oben genannten Herstellungsverfahren hergestellt worden ist.

Weitere Vorteile, Merkmale und Einzelheiten der Erfindung ergeben sich aus der nachfolgenden Beschreibung, in der unter Bezugnahme auf die Zeichnung ein besonders bevorzugtes Ausführungsbeispiel im einzelnen beschrieben ist. Dabei können die in der Zeichnung dargestellten sowie in der Beschreibung und in den Ansprüchen erwähnten Merkmale jeweils einzeln für sich oder in beliebiger Kombination erfindungswesentlich sein.

In der Zeichnung zeigen:
- Figur 1: eine perspektivische Ansicht eines Getränkebeutels;
- Figur 2: eine Ansicht in Richtung des Pfeils II gemäß Figur 1;
- Figur 3: einen Faltzuschnitt für einen Getränkebeutel gemäß Figur 1 gemäß dem Stand der Technik;
- Figur 4: einen Schnitt IV-IV gemäß Figur 3;
- Figur 5: einen Faltzuschnitt für einen Getränkebeutel gemäß Figur 1 gemäß der Erfindung; und
- Figur 6: eine schematische Darstellung der erfindungsgemäßen Vorrichtung.

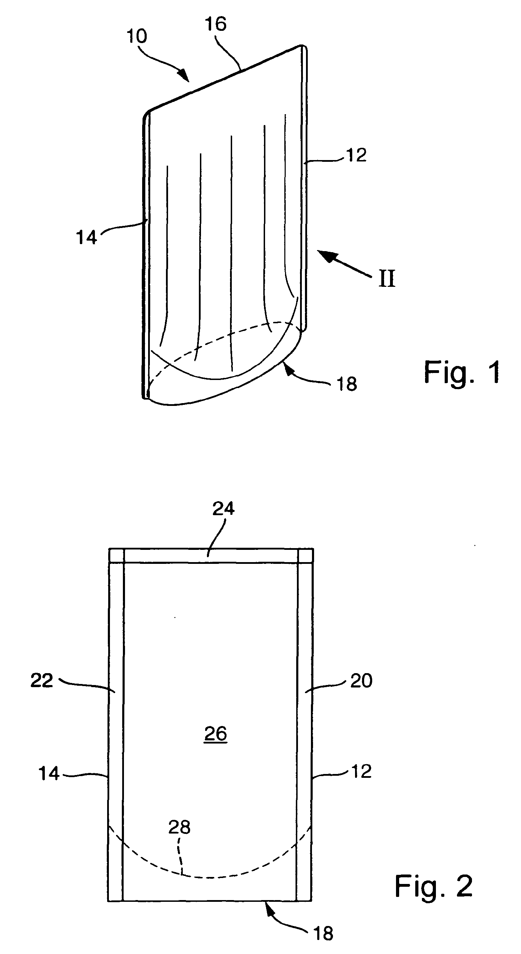

In der Figur 1 ist mit dem Bezugszeichen 10 ein Beutel bezeichnet, mit welchem z.B. Getränke verpackt werden können. Dieser Beutel 10 ist entlang seiner Längsseiten 12 und 14 sowie seiner Oberseite 16 verschweißt. Die Unterseite wird von einem Boden 18 gebildet, der durch Faltung und Ausstülpung des Zuschnitts gebildet wurde.

In der Figur 2 sind mit den Bezugszeichen 20 bis 24 die Schweißnähte bezeichnet, die entlang der Längsseiten 12 und 14 sowie der Oberseite 16 gebildet wurden. Der Innenraum 26 wird im Bereich des Bodens 18 von der mit 28 bezeichneten Linie begrenzt.

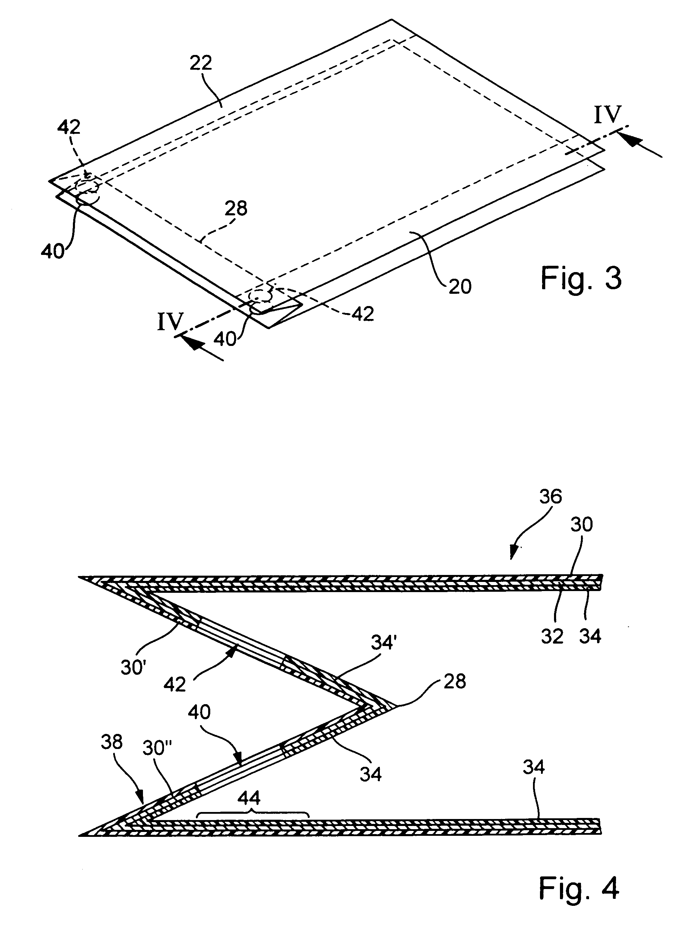

Unterhalb dieser Linie 28 sind der Zuschnitt und somit auch die beiden Längsseiten 12 und 14 doppelt gefaltet, wie es in der Figur 3 dargestellt ist.

In der Figur 4 ist der Bodenbereich des Beutel 10 im Schnitt IV - IV dargestellt, und es sind die drei Schichten 30, 32 und 34 des Laminats 36 dargestellt. Die Schicht 30 besteht aus einem Kunststoff mit einem Schmelzpunkt, der im Bereich von 180°C liegt, z.B. PET (Polyethylenterephthalat). Die die Innenlage bildende Schicht 34 besteht ebenfalls aus Kunststoff, der jedoch einen niedrigeren Schmelzpunkt im Bereich von 110°C bis 120°C aufweist, z.B. PE (Polyethylen). Zwischen den beiden Schichten 30 und 34 liegt eine Schicht 32 aus Aluminium.

Durch die doppelte Faltung in Form eines W im Bereich des Bodens 18 wird eine Standfläche für den Beutel 10 erzeugt. Hierfür ist es aber auch erforderlich, dass die Längsseiten 12 und 14 über die Linie 28 hinaus bis zu ihrem unteren Ende, also bis in den Bereich der doppelten Faltung hinein miteinander verschweißt werden. Oberhalb der Linie 28 liegen die beiden innen liegenden Schichten 34 aneinander an und können problemlos miteinander verschweißt werden. Unterhalb der Linie 28 liegt die sich entlang der Längsseite 12 erstreckende Schicht 34 an einer Schicht 34' an, welche nach innen gefaltet ist. Da die beiden Schichten 34 und 34' aus dem gleichen Material bestehen, ist auch hier eine Verschweißung problemlos möglich. Dies gilt auch für den gegenüberliegenden Bereich. Im eingefalteten Abschnitt 38 liegen aber auch zwei Schichten 30' und 30" aneinander an, die zwar aus dem gleichen Material bestehen, dieses Material jedoch einen höheren Schmelzpunkt aufweist, als das Material der Schichten 34 und 34'. Durch den zum Plastifizieren des Materials der Schichten 34 und 34' aufgewandten Wärmeeintrag wird das Material der Schichten 30' und 30" nicht plastifiziert, da der Wärmeeintrag hierfür zu gering ist beziehungsweise die Schmelztemperatur dieses Materials zu hoch ist. Wird der Wärmeeintrag durch weitere Energiezufuhr über die Heizelemente erhöht, wird zwar das Material der beiden Schichten 30' und 30'' plastifiziert, jedoch wird durch diesen hohen Wärmeeintrag das Material der Schichten 34 und 34' zerstört. Es verbietet sich daher ein höherer Wärmeeintrag.

Dieses Problem wird beim Stand der Technik dadurch gelöst, dass im eingefalteten Abschnitt 38 im Bereich der Schweißnähte 20 und 22 zwei Ausstanzungen 40 und 42 vorgesehen werden, was den Effekt hat, dass beim Zusammenfalten des Zuschnitts im Bereich dieser Ausstanzungen 40 und 42 die Schicht 34 auf einen Abschnitt 44 der gegenüberliegenden Schicht 34 des Laminats 36 zu liegen kommt, so dass die beiden Längsseiten 12 und 14 durch den eingefalteten Abschnitt 38 hindurch direkt miteinander verschweißt werden. Hierfür ist jedoch ein Stanzvorgang für die beiden Ausstanzungen 40 und 42 erforderlich.

Bei der Erfindung wird eine Ultraschallsonotrode 46 verwendet, die an ihrer Spitze eine Ausbauchung 48 aufweist. Mit dieser Ultraschallsonotrode 46 wird zunächst das Material der innen liegenden Schichten 34 und 34' plastifiziert und anschließend verdrängt. Der weitere Energieeintrag plastifiziert nun das Material der Schichten 30' und 30'', sodass diese miteinander verbunden werden, wobei das verdrängte Material der Schichten 34 in 34' nicht zerstört wird. Hierdurch werden in einem Arbeitsgang alle im Bodenbereich aneinander liegenden Schichten 34, 34', 30' und 30'' miteinander verbunden. Einer Ausstanzung bedarf es demnach nicht mehr.

Es hat sich gezeigt, dass die Schweißergebnisse dadurch verbessert werden, wenn der Amboss 50 einen ersten Freiheitsgrad 52 in Schwingungsrichtung 54 der Ultraschallsonotrode 46 und/oder einen zweiten Freiheitsgrad 56 aufweist, was zum Beispiel durch eine elastisch gelagerten Amboss 58 erzielt werden kann.

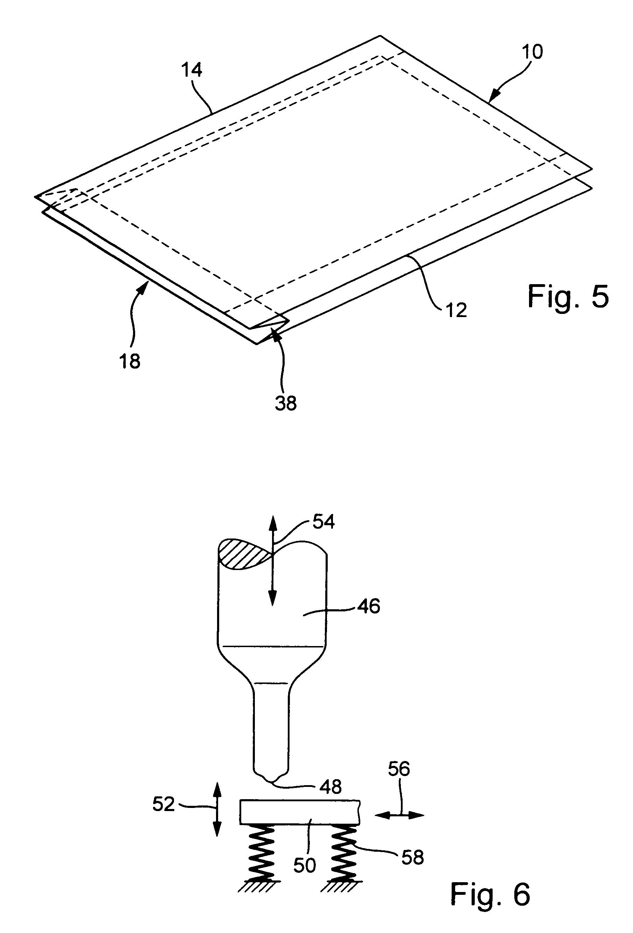

Die Figur 5 zeigt einen Beutel 10, der nach dem erfindungsgemäßen Verfahren hergestellt wurde, der also in seinem Bereich des Bodens 18 keine Ausstanzungen besitzt, da die Längsseiten 12 und 14 mittels Ultraschall zusammen mit dem eingefalteten Abschnitt 38 innig miteinander verschweißt werden können.

## Patentansprüche

1. Vorrichtung zum Verschweißen von mehreren Lagen von Laminaten (36), mit einer Ultraschallsonotrode (46) und einem Amboss (50), die zwischen sich wenigstens drei Lagen der Laminate (36) aufnehmen, wobei wenigstens zwei der Laminatschichten (30, 34) unterschiedlich hohe Schmelzpunkte aufweisen, **dadurch gekennzeichnet, dass** die Vorrichtung eine Ultraschallschweißvorrichtung ist.

2. Vorrichtung nach Anspruch 1, **dadurch gekennzeichnet, dass** der Amboss (50) elastisch gelagert ist.

3. Vorrichtung nach einem der vorhergehenden Ansprüche, **dadurch gekennzeichnet, dass** die Kontaktfläche des Ambosses (50) einen Freiheitsgrad (52) in Schwingungsrichtung (54) der Ultraschallsonotrode (46) besitzt.

4. Vorrichtung nach einem der vorhergehenden Ansprüche, **dadurch gekennzeichnet, dass** die Kontaktfläche des Ambosses (50) einen Freiheitsgrad (56) senkrecht zur Schwingungsrichtung (54) der Ultraschallsonotrode (46) aufweist.

5. Vorrichtung nach einem der vorhergehenden Ansprüche, **dadurch gekennzeichnet, dass** der Amboss (50) frei auskragend gelagert ist.

6. Vorrichtung nach einem der vorhergehenden Ansprüche, **dadurch gekennzeichnet, dass** der Amboss (50) auf einem Federelement (58) ruht.

7. Vorrichtung nach einem der vorhergehenden Ansprüche, **dadurch gekennzeichnet, dass** die Spitze der Ultraschallsonotrode (46) eine Ausbauchung (48) aufweist.

8. Verwendung einer Vorrichtung nach einem der vorhergehenden Ansprüchen, zur Herstellung einer aus einem Beutel (10) bestehenden Verpackung, insbesondere einer Getränkeverpackung.

9. Verwendung nach Anspruch 8, **dadurch gekennzeichnet, dass** mit der Vorrichtung der Boden (18) des Beutels (10) ausstanzungsfrei hergestellt wird.

10. Verfahren zum Verschweißen von mehreren Lagen von Laminaten (36), bei denen wenigstens zwei Laminatschichten (30, 34) unterschiedlich hohe Schmelzpunkte aufweisen, wobei wenigstens drei Laminatlagen miteinander verschweißt werden und die Lagen derart übereinander gelagert werden, dass die Schichten (30, 34) mit gleich hohen Schmelzpunkten an einander anliegen, **dadurch gekennzeichnet, dass** die Laminatschichten (30, 34) mittels Ultraschall miteinander verschweißt werden.

11. Verfahren nach Anspruch 10, **dadurch gekennzeichnet, dass** nach dem Plastifizieren des Materials der Schicht (34) mit niedrigen Schmelzpunkt dieses Material so lange verdrängt wird, bis der erforderliche Schweißdruck zum Plastifizieren des Materials der Schicht (30) mit höheren Schmelzpunkt vorherrscht.

12. Verfahren nach Anspruch 10 oder 11, **dadurch gekennzeichnet, dass** der Schweißdruck während des Schweißvorganges erhöht wird.

13. Vorrichtung nach einem der Ansprüche 10 bis 12, **dadurch gekennzeichnet, dass** die Ultraschallsonotrode (46) während des Schweißvorganges zugestellt wird.

14. Beutel (10) **dadurch gekennzeichnet, dass** er nach einem Verfahren gemäß der Ansprüche 10 bis 13 hergestellt worden ist.
